# EUROPEAN PATENT SPECIFICATION

(11) **EP 4 203 226 B1**
(45) Date of publication and mention of the grant of the patent: **19.08.2026**
(21) Application number: 21863275.0
(22) Date of filing: 28.05.2021
(51) Int. Cl.: H02J 3/16, G05F 1/67, H02J 3/38, H02J 3/36

(54) **SEMI-DIRECT DRIVE DIRECT-CURRENT WIND TURBINE GENERATOR UNIT, AND CONTROL METHOD AND DEVICE THEREFOR**
GLEICHSTROM-WINDTURBINENGENERATOREINHEIT MIT HALBDIREKTANTRIEB UND STEUERUNGSVERFAHREN UND VORRICHTUNG DAFÜR
UNITÉ AÉROGÉNÉRATRICE À COURANT CONTINU À ENTRAÎNEMENT SEMI-DIRECT, ET PROCÉDÉ ET DISPOSITIF DE COMMANDE ASSOCIÉS

(30) Priority: 01.09.2020 CN 202010903612
(43) Date of publication of application: 28.06.2023
(73) Proprietor: Goldwind Science & Technology Co., Ltd., Urumqi, Xinjiang 830026 (CN)
(72) Inventor: FENG, Qita, Beijing 100176 (CN); TANG, Mingjie, Beijing 100176 (CN); LI, Zhanlong, Beijing 100176 (CN)
(74) Representative: Gulde & Partner
(86) International application number: PCT/CN2021/096690
(87) International publication number: WO 2022/048205

(56) References cited:
- EP-A1- 1 512 869
- CN-A- 103 915 859
- CN-A- 103 915 859
- CN-A- 110 176 781
- CN-A- 111 316 521
- CN-A- 112 310 971
- US-A1- 2015 008 743
- US-A1- 2015 337 808
- ZAKI ELDEEN ELHASSAN: "Study of Multitype Control of Grid-Connected Doubly Fed Induction Generator (DFIG)", CHINESE DOCTORAL DISSERTATIONS FULL-TEXT DATABASE, 15 August 2016 (2016-08-15), CN, XP055906410, ISSN: 1674-022X
- ZAKI ELDEEN ELHASSAN: "Study of Multitype Control of Grid-Connected Doubly Fed Induction Generator (DFIG)", CHINESE DOCTORAL DISSERTATIONS FULL-TEXT DATABASE, UNIVERSITY OF CHINESE ACADEMY OF SCIENCES, CN, 15 August 2016 (2016-08-15), CN , XP055906410, ISSN: 1674-022X

## Description

### FIELD

The present disclosure generally relates to the technical field of wind power, and in particular to a semi-direct-drive direct current wind turbine and a control method and device therefor.

### BACKGROUND

Offshore wind farms are attracting attention increasingly, where high voltage direct current (HVDC) is an applicable option for the power transmission in long distance offshore wind farms. The existing offshore step-up stations are alternating current/direct current (AC/DC) step-up stations. The alternating current output from the wind turbine is collected through a step-up transformer, and then is passed through a large-scale transformer and an offshore step-up station. The construction for such system is challenging and uneconomical. ZAKI ELDEEN ELHASSAN's "Study of Multitype control of Grid-connected Doubly Fed Induction Generator (DFIG)" (15 August 2016, XP055906410, ISSN: 1674-022X) discloses the study of multitype control the DFIG, which considers the DFIG voltage control and frequency coordinated control in a steady state mode and transient operation; on the basis that the DFIG is operating in a maximum power point tracking mode, a static var compensator (SVC) is connected in parallel to maintain voltage stability of a DC link. Document XP055906410 is seen as closest prior Art by the EPO.

CN 103915859A discloses a method for controlling a double-fed wind power plant capable of improving the transient stability of a power grid, in which the total power of wind power plant grid connection points is used as the controlled quantity, when the power grid breaks down, a wind power plant control center is used for detecting the frequencies and voltages of the wind power plant grid connection points in real time, active power output and reactive power output of the wind power plant can be adjusted according to the frequency deviation, the voltage deviation and the voltage change ratio of the power grid, the active power control quantity and the reactive power control quantity are distributed to all sets and SVCs. US 20150337808A1 discloses controlling voltage at a point of common coupling of a wind farm including a plurality of wind turbines, which includes: calculating a first voltage error value, which is a difference between a reference voltage value of the point of common coupling and an actual voltage value of the point of common coupling; calculating a compensation reference voltage value based on the first voltage error value; calculating a second voltage error value by subtracting a voltage value of an output terminal of a wind turbine from a sum of a reference voltage value of the wind turbine and the compensation reference voltage value; calculating a reactive power compensation value corresponding to the second voltage error value; and injecting a reactive current corresponding to the reactive current compensation value into a power grid.

### SUMMARY

A semi-direct-drive direct current wind turbine and a control method and device therefor are provided according to the exemplary embodiments of the present disclosure, which can control the reactive power compensation device to adjust the voltage at the connection point, so that the active power outputted by the generator of the semi-direct-drive direct current wind turbine can be sent out after going through step-up transformation and rectification (for example, uncontrolled rectification).

According to an exemplary embodiment of the present disclosure, a control method for a semi-direct-drive direct current wind turbine is provided, the control method includes: determining, in a case that the semi-direct-drive direct current wind turbine operates in a maximum power point tracking MPPT mode, a reference output voltage of a reactive power compensation device; controlling, using the determined reference output voltage of the reactive power compensation device as a target, an output voltage of the reactive power compensation device, to adjust a voltage at a connection point, where controlling the output voltage of the reactive power compensation device enables controlling an active power at the connection point and controlling an electromagnetic torque acting on a rotor of the semi-direct-drive direct current wind turbine; where an input terminal of a generator of the semi-direct-drive direct current wind turbine is connected to a gearbox, and an output terminal of the generator is respectively connected to a primary side of a transformer at the generator side and the reactive power compensation device via the connection point, and a secondary side of the transformer at the generator side is connected to an output terminal of the semi-direct-drive direct current wind turbine via a rectifier and a high voltage switching device in sequence.

According to another exemplary embodiment of the present disclosure, a control device for a semi-direct-drive direct current wind turbine is provided, the control device includes: a reference voltage determination unit, configured to determine a reference output voltage of a reactive power compensation device in a case that the semi-direct-drive direct current wind turbine operates in a maximum power point tracking MPPT mode; a voltage control unit, configured to control an output voltage of the reactive power compensation device by using the determined reference output voltage of the reactive power compensation device as a target, to adjust a voltage at a connection point, where controlling the output voltage of the reactive power compensation device enables controlling an active power at the connection point and controlling an electromagnetic torque acting on a rotor of the semi-direct-drive direct current wind turbine; where an input terminal of a generator of the semi-direct-drive direct current wind turbine is connected to a gearbox, and an output terminal of the generator is respectively connected to a primary side of a transformer at the generator side and the reactive power compensation device via the connection point, and a secondary side of the transformer at the generator side is connected to an output terminal of the semi-direct-drive direct current wind turbine via a rectifier and a high voltage switching device in sequence.

According to another exemplary embodiment of the present disclosure, a semi-direct-drive direct current wind turbine is provided, including the above control device.

According to another exemplary embodiment of the present disclosure, a control device for a semi-direct-drive direct current wind turbine is provided, the control device includes: a processor; and a memory, configured to store a computer program, wherein the processor, when executing the computer program, implements the above control method for a semi-direct-drive direct current wind turbine.

According to another exemplary embodiment of the present disclosure, a computer-readable storage medium storing a computer program is provided, wherein the computer program, when executed by a processor, implements the above control method for a semi-direct-drive direct current wind turbine.

According to the exemplary embodiments of the present disclosure, the semi-direct-drive direct current wind turbine and the control method and device therefor can control the reactive power compensation device to adjust the voltage at the connection point, so that the active power outputted by the generator can be sent out after going through step-up transformation and rectification (for example, uncontrolled rectification).

Additional aspects and/or advantages of the general inventive concept of the present disclosure will be partially set forth in the following description, and some of them will be clear from the description, or can be understood through implementation of the general inventive concept of the present disclosure.

### BRIEF DESCRIPTION OF THE DRAWINGS

The above purposes, other purposes and features of exemplary embodiments of the present disclosure will become clearer through the following descriptions in conjunction with the accompanying drawings exemplarily demonstrating the embodiments, in which:
Figure 1 is a structural block diagram of a semi-direct-drive direct current wind turbine according to an exemplary embodiment of the present disclosure;
Figure 2 is a flowchart of a control method for a semi-direct-drive direct current wind turbine according to an exemplary embodiment of the present disclosure;
Figure 3 is a schematic structural diagram of an MMC according to an exemplary embodiment of the present disclosure;
Figure 4 is a schematic structural diagram of a STATCOM according to an exemplary embodiment of the present disclosure;
Figure 5 is a schematic structural diagram of an SVG according to an exemplary embodiment of the present disclosure;
Figure 6 is a flowchart of a method for determining a reference output voltage of a reactive power compensation device according to an exemplary embodiment of the present disclosure;
Figure 7 is an example of determining a reference output voltage of a reactive power compensation device according to an exemplary embodiment of the present disclosure;
Figure 8 is a simulation operation diagram of a semi-direct-drive direct current wind turbine according to an exemplary embodiment of the present disclosure; and
Figure 9 is a structural block diagram of a control device for a semi-direct-drive direct current wind turbine according to an exemplary embodiment of the present disclosure.

### DETAILED DESCRIPTION OF EMBODIMENTS

Reference will now be made in detail to embodiments of the present disclosure, examples of which are illustrated in the accompanying drawings, wherein identical reference numbers refer to identical parts throughout the description. In order to explain the present disclosure, the embodiments will be illustrated by referring to the drawings hereinafter.

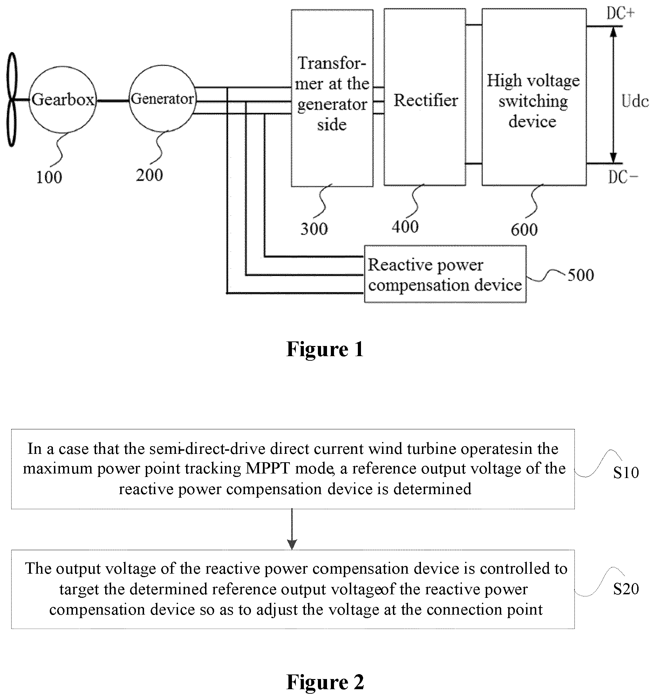

Figure 1 is a structural block diagram of a semi-direct-drive direct current wind turbine according to an exemplary embodiment of the present disclosure.

As shown in Figure 1, a semi-direct-drive direct current wind turbine according to an exemplary embodiment of the present disclosure includes: a gearbox 100, a generator 200, a transformer 300 at the generator side, a rectifier 400, a reactive power compensation device 500, and a high voltage switching device 600. It should be understood that the semi-direct-drive direct current wind turbine according to the exemplary embodiment of the present disclosure may further include other components required for a wind turbine, for example, an impeller, which is not limited in the present disclosure.

An input terminal of the generator 200 is connected to the gearbox 100, and an output terminal of the generator 20 is respectively connected to a primary side of the transformer 300 at the generator side and the reactive power compensation device 500 through a connection point. A secondary side of the transformer 300 at the generator side is connected to an output terminal of the semi-direct-drive direct current wind turbine via a rectifier 400 and a high voltage switching device 600 in sequence.

In this embodiment, the connection point is configured to enable the output terminal of the generator 200 to be directly connected to the reactive power compensation device 500 while being directly connected to the transformer 300 at the generator side.

The reactive power compensation device 500 is configured to adjust a voltage at the connection point. As an example, the reactive power compensation device 500 may adjust the amplitude and phase of the three-phase alternating current voltage at the connection point. As an example, the reactive power compensation device 500 may boost the voltage at the connection point by outputting reactive power to the connection point (for example, in a case that the voltage at the connection point is low due to low wind speed), so that the active power outputted from the generator can be sent out through the output terminal of the semi-direct-drive direct current wind turbine after going through step-up transformation and rectification (for example, uncontrolled rectification). According to the exemplary embodiment of the present disclosure, it is unnecessary to arrange a converter as the reactive power compensation device is arranged on the generator side. Since the capacity required by the reactive power compensation device for compensating reactive power is only equivalent to 1/4 capacity of the back-to-back converter and the manufacturing cost is cheaper than that of the full-power converter, it reduces the manufacturing cost of the wind turbine.

As an example, the reactive power compensation device 500 may be one of the following: a modular multilevel converter (MMC), a static synchronous compensator (STATCOM), and a static var generator (SVG). It should be understood that other types of reactive power compensation devices may also be used, which is not limited in the present disclosure.

As an example, rectifier 400 may include multiple diode bridge rectifiers. As an example, the rectifier 400 may include at least one set of diode bridge rectifiers, and each set includes three diode bridge rectifiers. In each set, first connection terminals of the diode bridge rectifiers serve as the alternating current input terminals of the diode bridge rectifier set. The alternating current input terminals of each set are connected to the secondary side of the transformer 300 at the generator side. As an example, if the rectifier 400 includes multiple sets of diode bridge rectifiers, the multiple sets of diode bridge rectifiers may be connected in series. According to an exemplary embodiment of the present disclosure, the rectifier 400 is implemented by using diode bridge rectifiers instead of IGBTs, which reduces the on-off loss and improves the system efficiency.

As an example, the generator 200 may be a permanent magnet synchronous generator.

Figure 2 is a flowchart of a control method for a semi-direct-drive direct current wind turbine according to an exemplary embodiment of the present disclosure.

Referring to Figure 2, in step S10, in a case that the semi-direct-drive direct current wind turbine operates in the maximum power point tracking (MPPT) mode, a reference output voltage of the reactive power compensation device is determined.

As an example, the reference output voltage of the reactive power compensation device may be determined based on at least one of the following: a present wind speed (for example, incoming wind speed), a present generator speed, a present voltage value at the connection point, a present current value at the connection point, a present voltage value of the voltage module of the reactive power compensation device, and a reference voltage of the voltage module of the reactive power compensation device. The reference voltage of the voltage module of the reactive power compensation device is a voltage that enables the reactive power compensation device to operate in a voltage-balanced state of the voltage module.

It should be understood that the wind speed is the ambient wind speed of the semi-direct-drive direct current wind turbine.

It should be understood that the reactive power compensation device may include multiple voltage modules.

It should be understood that the reference output voltage of the reactive power compensation device may also be determined based on other types of operating parameters of the semi-direct-drive direct current wind turbine and/or other operating parameters of the wind farm.

As an example, the reference output voltage of the reactive power compensation device may be determined via proportional and integral (PI) adjustment, based on at least one of the wind speed, the generator speed, the voltage value at the connection point, the current value at the connection point, the voltage value of the voltage module of the reactive power compensation device, and the reference voltage of the voltage module of the reactive power compensation device, so that the active power outputted from the generator can be output to outside through the output terminal of the semi-direct-drive direct current wind turbine.

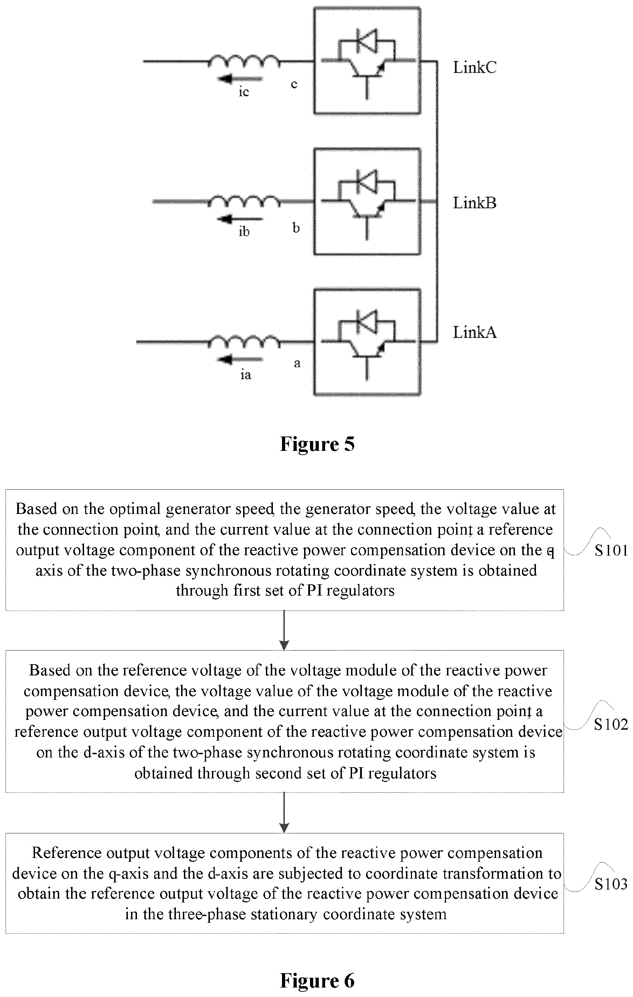

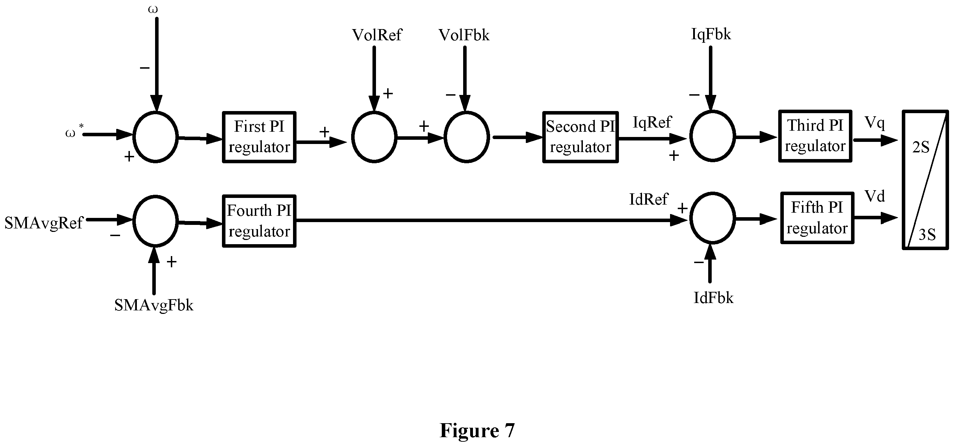

An exemplary embodiment of step S10 will be described in detail below with reference to Figure 6 and Figure 7.

In step S20, the output voltage of the reactive power compensation device is controlled to target the determined reference output voltage of the reactive power compensation device so as to adjust the voltage at the connection point. In this way, the active power outputted by the generator can be transmitted out after going through step-up transformation and rectification (for example, uncontrolled rectification). In other words, by controlling the output voltage of the reactive power compensation device, the active power at the connection point is controlled so as to control the electromagnetic torque acting on the rotor, thereby adjusting the rotor speed to the optimal generator speed and realizing MPPT.

As an example, based on the determined reference output voltage of the reactive power compensation device, the PWM pulse signals used to control voltage modules of the reactive power compensation device may be determined. And, the determined PWM pulse signals are sent to the respective voltage modules, so that the output voltage of the reactive power compensation device tracks the reference output voltage.

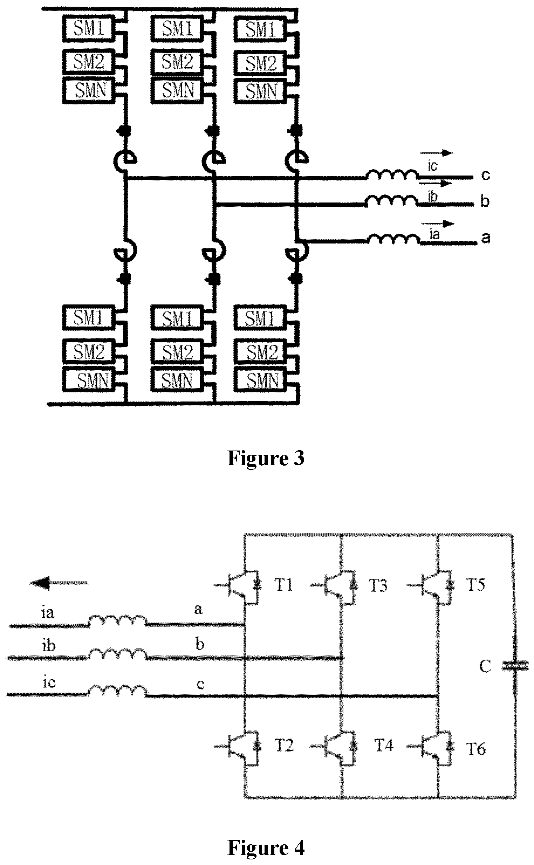

For example, Figure 3 is a schematic structural diagram of an MMC according to an exemplary embodiment of the present disclosure. The SM in Figure 3 indicates a voltage module. Figure 4 is a schematic structural diagram of a STATCOM according to an exemplary embodiment of the present disclosure and Figure 5 is a schematic structural diagram of an SVG according to an exemplary embodiment of the present disclosure. In Figure 4 and Figure 5, the upper and lower insulated gate bipolar transistors IGBTs (for example, T1 and T2) and the freewheeling diodes connected in anti-parallel to the IGBTs form a voltage module. For example, by sending PWM pulse signals determined based on the reference output voltage of the reactive power compensation device to the IGBTs in the respective voltage modules, it may be implemented that the output voltage of the reactive power compensation device tracks the reference output voltage.

Figure 6 is a flowchart of a method for determining a reference output voltage of a reactive power compensation device according to an exemplary embodiment of the present disclosure.

Referring to Figure 6, in step S101, based on the optimal generator speed, the generator speed, the voltage value at the connection point, and the current value at the connection point, a reference output voltage component of the reactive power compensation device on a q-axis of a two-phase synchronous rotating coordinate system is obtained through a first set of PI regulators.

The optimal generator speed is a generator speed determined based on the present wind speed that enables maximum power point tracking.

In step S102, based on the reference voltage of the voltage module of the reactive power compensation device, the voltage value of the voltage module of the reactive power compensation device, and the current value at the connection point, a reference output voltage component of the reactive power compensation device on a d-axis of the two-phase synchronous rotating coordinate system is obtained through a second set of PI regulators.

In step S103, the reference output voltage components of the reactive power compensation device on the q-axis and the d-axis are subjected to coordinate transformation to obtain the reference output voltage of the reactive power compensation device in the three-phase stationary coordinate system.

Figure 7 is an example of determining a reference output voltage of a reactive power compensation device according to an exemplary embodiment of the present disclosure.

As shown in Figure 7, the first set of PI regulators may include a first PI regulator, a second PI regulator, and a third PI regulator. Accordingly, step S 101 may include: the difference between the optimal generator speed ω* and the generator speed ω is inputted to the first PI regulator. Then, the difference between a sum of the output of the first PI regulator plus the rated voltage VolRef of generator and the voltage value VolFbk at the connection point is inputted to the second PI regulator. Further, the difference between the inner current loop reference component IqRef on the q-axis outputted by the second PI regulator and the current component IqFbk at the connection point on the q-axis is inputted to the third PI regulator, and the reference output voltage component Vq of the reactive power compensation device on the q-axis is outputted through the third PI regulator.

The second set of PI regulators may include a fourth PI regulator and a fifth PI regulator. Correspondingly, step S102 may include: the difference between the average voltage value SMAvgFbk of the voltage modules of the reactive power compensation device and the reference voltage SMAvgRef of the voltage module of the reactive power compensation device is inputted to the fourth PI regulator; the difference between the inner current loop reference component IdRef on the d-axis outputted by the fourth PI regulator and the current component IdFbk at the connection point on the d-axis is inputted to the fifth PI regulator, and the reference output voltage component Vd of the reactive power compensation device on the d-axis is outputted through the fifth PI regulator.

It should be understood that the present current component IqFbk at the connection point on the q-axis and the present current component IdFbk at the connection point on the d-axis may be obtained by coordinate transforming the present three-phase current values at the connection point.

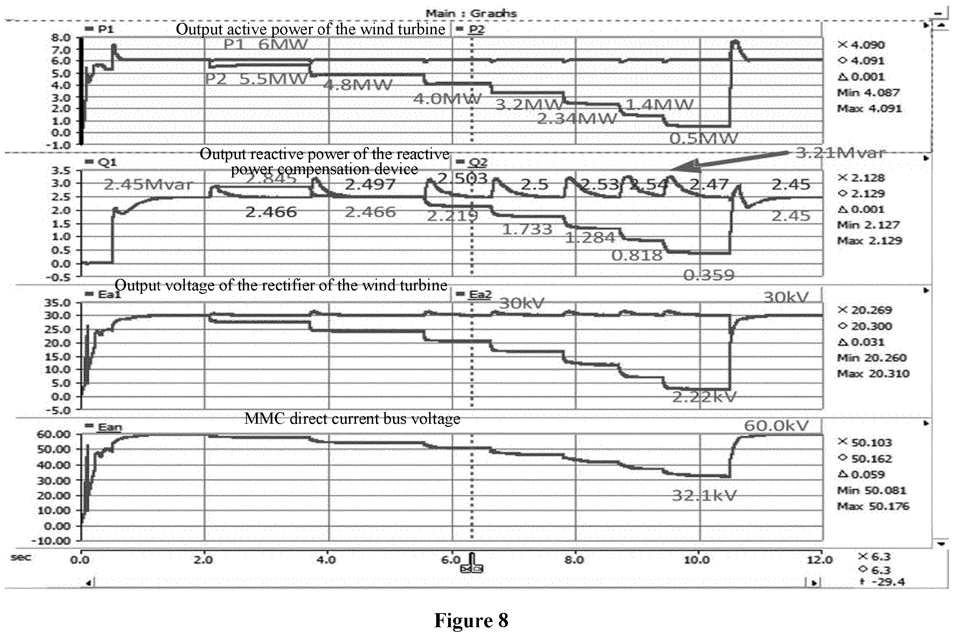

Figure 8 is a simulation operation diagram of a semi-direct-drive direct current wind turbine according to an exemplary embodiment of the present disclosure.

The simulation objects are a semi-direct-drive direct current wind turbine #1 and a semi-direct-drive direct current wind turbine #2 with a rated power of 6MW. After being connected in series, the two semi-direct-drive direct current wind turbines are connected to the power grid through the modular multilevel converter MMC. The MMC controls the system direct current (DC) current, whose current value tracks the maximum power of the semi-direct-drive direct current wind turbines. As shown in Figure 5, the two are controlled with the control method for the semi-direct-drive direct current wind turbine according to the exemplary embodiment of the present disclosure, with a simulation operation result as follows: the active output power of the semi-direct-drive direct current wind turbine #1 basically maintains at 6MW constantly, and the active output power of the semi-direct-drive direct current wind turbine #2 gradually decreases from 6MW to 0.5MW and then increases to 6MW. The DC voltage outputted by the semi-direct-drive direct current wind turbine #1 basically remains at 30kV constantly, and the DC voltage outputted by the semi-direct-drive direct current wind turbine #2 gradually decreases, where the outputted DC voltage is 2.22kV and the required reactive power support from the reactive power compensation device is 0.359Mvar while the active output power is 0.5MW. When the active output power of semi-direct-drive direct current wind turbine #2 is 0.5MW, the total outputted DC voltage of the semi-direct-drive direct current wind turbine #1 and the semi-direct-drive direct current wind turbine #2 is 32.1kV. When the active output power of the semi-direct-drive direct current wind turbine #2 is recovered to 6MW, the total outputted DC voltage of the semi-direct-drive direct current wind turbine#1 and the semi-direct-drive direct current wind turbine #2 is 60kV.

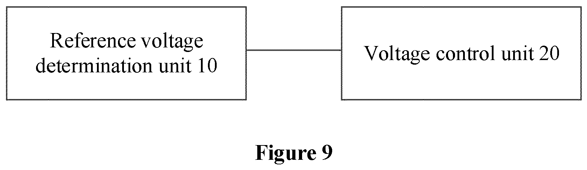

Figure 9 is a structural block diagram of a control device for a semi-direct-drive direct current wind turbine according to an exemplary embodiment of the present disclosure.

As shown in Figure 9, according to an exemplary embodiment of the present disclosure, a control device for a semi-direct-drive direct current wind turbine includes: a reference voltage determination unit 10 and a voltage control unit 20.

Specifically, the reference voltage determination unit 10 is configured to determine a reference output voltage of a reactive power compensation device in a case that the semi-direct-drive direct current wind turbine operates in a maximum power point tracking MPPT mode.

The voltage control unit 20 is configured to control an output voltage of the reactive power compensation device by using the determined reference output voltage of the reactive power compensation device as the target, to adjust a voltage at the connection point.

As an example, the reference voltage determination unit 10 may be configured to determine the reference output voltage of the reactive power compensation device based on at least one of a wind speed, a generator speed, a voltage value at the connection point, a current value at the connection point, a voltage value of a voltage module of the reactive power compensation device, and a reference voltage of the voltage module of the reactive power compensation device; where the reference voltage of the voltage module of the reactive power compensation device is a voltage that enables the reactive power compensation device to operate in a voltage-balanced state of the voltage module.

As an example, the reference voltage determination unit 10 may be configured to determine the reference output voltage of the reactive power compensation device through PI adjustment, based on at least one of the wind speed, the generator speed, the voltage value at the connection point, the current value at the connection point, the voltage value of the voltage module of the reactive power compensation device and the reference voltage of the voltage module of the reactive power compensation device, so that an active power outputted by the generator is enabled to output to outside through the output terminal of the semi-direct-drive direct current wind turbine.

As an example, the reference voltage determination unit 10 may include: a first component determination unit (not shown), a second component determination unit (not shown), and a transformation unit (not shown).

The first component determination unit is configured to obtain a reference output voltage component of the reactive power compensation device on a q-axis of a two-phase synchronous rotating coordinate system based on an optimal generator speed, a generator speed, the voltage value at the connection point and the current value at the connection point through a first set of PI regulators.

The second component determination unit is configured to obtain a reference output voltage component of the reactive power compensation device on a d-axis of the two-phase synchronous rotating coordinate system based on the reference voltage of the voltage module of the reactive power compensation device, the voltage value of the voltage module of the reactive power compensation device and the current value at the connection point through a second set of PI regulators.

The transformation unit is configured to obtain the reference output voltage of the reactive power compensation device in a three-phase stationary coordinate system by performing coordinate transformation on the reference output voltage component of the reactive power compensation device on the q-axis and the reference output voltage component of the reactive power compensation device on the d-axis. The optimal generator speed is a generator speed determined based on the wind speed that enables maximum power point tracking.

As an example, the first set of PI regulators may include a first PI regulator, a second PI regulator, and a third PI regulator, where the first component determination unit may input a difference between the optimal generator speed and the generator speed to the first PI regulator; input a difference between a sum of an output of the first PI regulator plus a rated voltage of the generator and the voltage value at the connection point to the second PI regulator; and input a difference between an output of the second PI regulator and a current component at the connection point on the q-axis of the two-phase synchronous rotating coordinate system to the third PI regulator; and output the reference output voltage component of the reactive power compensation device on the q-axis of the two-phase synchronous rotating coordinate system through the third PI regulator.

As an example, the second set of PI regulators may include a fourth PI regulator and a fifth PI regulator; where the second component determination unit may input a difference between an average voltage value of voltage modules of the reactive power compensation device and the reference voltage of the voltage module of the reactive power compensation device to the fourth PI regulator; input a difference between an output of the fourth PI regulator and a current component at the connection point on the d-axis of the two-phase synchronous rotating coordinate system to the fifth PI regulator; and output the reference output voltage component of the reactive power compensation device on the d-axis of the two-phase synchronous rotating coordinate system through the fifth PI regulator.

As an example, according to the exemplary embodiments of the present disclosure, the control device for a semi-direct-drive direct current wind turbine may be integrated in the reactive power compensation device.

As an example, the reactive power compensation device may be any one of a modular multilevel converter, a static var generator, and a static synchronous compensator.

It should be understood that the specific processes performed by the control device for a semi-direct-drive direct current wind turbine according to the exemplary embodiment of the present disclosure have been described in detail with reference to Figures 1-8, which will not be repeated here.

It should be understood that each unit in the control device for a semi-direct-drive direct current wind turbine according to the exemplary embodiment of the present disclosure may be implemented as hardware components and/or software components. Those skilled in the art may implement each device according to the defined processes performed by each device, for example, using a field programmable gate array (FPGA) or an application specific integrated circuit (ASIC).

According to the exemplary embodiments of the present disclosure, a semi-direct-drive direct current wind turbine is provided, which includes the control device for a semi-direct-drive direct current wind turbine according to the above exemplary embodiments.

According to exemplary embodiments of the present disclosure, a computer-readable storage medium storing a computer program is provided, where the computer program, when executed by a processor, implements the control method for a semi-direct-drive direct current wind turbine according to the above exemplary embodiments. The computer readable storage medium is any data storage device that can store data readable by a computer system. Examples of computer-readable storage media may include: read-only memory, random-access memory, compact disc-read-only, magnetic tape, floppy disk, optical data storage devices, and carrier waves (such as data transmission over the Internet via wired or wireless transmission paths).

According to an exemplary embodiment of the present disclosure, a control device for a semi-direct-drive direct current wind turbine includes: a processor (not shown) and a memory (not shown), where the memory stores a computer program, and the processor, when executes the computer program, implements the control method for a semi-direct-drive direct current wind turbine according to the above exemplary embodiments. As an example, the control device may be a controller of a wind farm.

## Claims

1. A control method for a semi-direct-drive direct current wind turbine, comprising:
determining (S10), in a case that the semi-direct-drive direct current wind turbine operates in a maximum power point tracking MPPT mode, a reference output voltage of a reactive power compensation device (500); and
controlling (S20), using the determined reference output voltage of the reactive power compensation device (500) as a target, an output voltage of the reactive power compensation device (500), to adjust a voltage at a connection point, wherein controlling the output voltage of the reactive power compensation device (500) enables controlling an active power at the connection point and controlling an electromagnetic torque acting on a rotor of the semi-direct-drive direct current wind turbine;
wherein an input terminal of a generator (200) of the semi-direct-drive direct current wind turbine is connected to a gearbox, and an output terminal of the generator (200) is respectively connected to a primary side of a transformer (300) at the generator side and the reactive power compensation device (500) via the connection point, and a secondary side of the transformer (300) at the generator side is connected to an output terminal of the semi-direct-drive direct current wind turbine via a rectifier (400) and a high voltage switching device (600) in sequence.

2. The control method according to claim 1, wherein the determining a reference output voltage of a reactive power compensation device (500) comprises:
determining the reference output voltage of the reactive power compensation device (500), based on at least one of a wind speed, a generator speed, a voltage value at the connection point, a current value at the connection point, a voltage value of a voltage module of the reactive power compensation device (500), and a reference voltage of the voltage module of the reactive power compensation device (500);
wherein the reference voltage of the voltage module of the reactive power compensation device (500) is a voltage that enables the reactive power compensation device (500) to operate in a voltage-balanced state of the voltage module.

3. The control method according to claim 2, wherein the determining a reference output voltage of a reactive power compensation device (500) comprises:
determining the reference output voltage of the reactive power compensation device (500) through PI adjustment, based on at least one of the wind speed, the generator speed, the voltage value at the connection point, the current value at the connection point, the voltage value of the voltage module of the reactive power compensation device (500) and the reference voltage of the voltage module of the reactive power compensation device (500), so that an active power outputted by the generator is enabled to be output out through the output terminal of the semi-direct-drive direct current wind turbine.

4. The control method according to claim 3, wherein the determining a reference output voltage of a reactive power compensation device (500) comprises:
obtaining (S101) a reference output voltage component of the reactive power compensation device (500) on a q-axis of a two-phase synchronous rotating coordinate system through a first set of PI regulators, based on an optimal generator speed, the generator speed, the voltage value at the connection point and the current value at the connection point;
obtaining (S102) a reference output voltage component of the reactive power compensation device (500) on a d-axis of the two-phase synchronous rotating coordinate system through a second set of PI regulators, based on the reference voltage of the voltage module of the reactive power compensation device (500), the voltage value of the voltage module of the reactive power compensation device (500) and the current value at the connection point; and
obtaining (S103) the reference output voltage of the reactive power compensation device (500) in a three-phase stationary coordinate system by performing coordinate transformation on the reference output voltage component of the reactive power compensation device (500) on the q-axis and the reference output voltage component of the reactive power compensation device (500) on the d-axis;
wherein the optimal generator speed is a generator speed that enables maximum power point tracking and is determined based on the wind speed.

5. The control method according to claim 4, wherein the first set of PI regulators comprises a first PI regulator, a second PI regulator, and a third PI regulator;
wherein the obtaining a reference output voltage component of the reactive power compensation device (500) on a q-axis of a two-phase synchronous rotating coordinate system through a first set of PI regulators comprises:
inputting a difference between the optimal generator speed and the generator speed to the first PI regulator;
inputting a difference between a sum of an output of the first PI regulator plus a rated voltage of the generator and the voltage value at the connection point to the second PI regulator;
inputting a difference between an output of the second PI regulator and a current component at the connection point on the q-axis of the two-phase synchronous rotating coordinate system to the third PI regulator; and
outputting the reference output voltage component of the reactive power compensation device (500) on the q-axis of the two-phase synchronous rotating coordinate system through the third PI regulator;
wherein the second set of PI regulators comprises a fourth PI regulator and a fifth PI regulator;
wherein the obtaining a reference output voltage component of the reactive power compensation device (500) on a d-axis of the two-phase synchronous rotating coordinate system through a second set of PI regulators comprises:
inputting a difference between an average voltage value of voltage modules of the reactive power compensation device (500) and the reference voltage of the voltage module of the reactive power compensation device (500) to the fourth PI regulator;
inputting a difference between an output of the fourth PI regulator and a current component at the connection point on the d-axis of the two-phase synchronous rotating coordinate system to the fifth PI regulator; and
outputting the reference output voltage component of the reactive power compensation device (500) on the d-axis of the two-phase synchronous rotating coordinate system through the fifth PI regulator.

6. The control method according to claim 1, wherein the reactive power compensation device (500) is any one of a modular multilevel converter, a static var generator, and a static synchronous compensator.

7. A control device for a semi-direct-drive direct current wind turbine, comprising:
a reference voltage determination unit (10), configured to determine a reference output voltage of a reactive power compensation device (500) in a case that the semi-direct-drive direct current wind turbine operates in a maximum power point tracking MPPT mode; and
a voltage control unit (20), configured to control an output voltage of the reactive power compensation device (500) by using the determined reference output voltage of the reactive power compensation device (500) as a target, to adjust a voltage at a connection point, wherein controlling the output voltage of the reactive power compensation device (500) enables controlling an active power at the connection point and controlling an electromagnetic torque acting on a rotor of the semi-direct-drive direct current wind turbine;
wherein an input terminal of a generator (200) of the semi-direct-drive direct current wind turbine is connected to a gearbox (100), and an output terminal of the generator (200) is respectively connected to a primary side of a transformer (300) at the generator side and the reactive power compensation device (500) via the connection point, and a secondary side of the transformer (300) at the generator side is connected to an output terminal of the semi-direct-drive direct current wind turbine via a rectifier (400) and a high voltage switching device (600) in sequence.

8. The control device according to claim 7, wherein the reference voltage determination unit (10) is configured to determine the reference output voltage of the reactive power compensation device (500) based on at least one of a wind speed, a generator speed, a voltage value at the connection point, a current value at the connection point, a voltage value of a voltage module of the reactive power compensation device (500), and a reference voltage of the voltage module of the reactive power compensation device (500);
wherein the reference voltage of the voltage module of the reactive power compensation device (500) is a voltage that enables the reactive power compensation device (500) to operate in a voltage-balanced state of the voltage module.

9. The control device according to claim 8, wherein the reference voltage determination unit (10) is configured to determine the reference output voltage of the reactive power compensation device (500) through PI adjustment, based on at least one of the wind speed, the generator speed, the voltage value at the connection point, the current value at the connection point, the voltage value of the voltage module of the reactive power compensation device (500) and the reference voltage of the voltage module of the reactive power compensation device (500), so that an active power outputted by the generator is enabled to be output out through the output terminal of the semi-direct-drive direct current wind turbine.

10. The control device according to claim 9, wherein the reference voltage determination unit (10) comprises:
a first component determination unit, configured to obtain a reference output voltage component of the reactive power compensation device (500) on a q-axis of a two-phase synchronous rotating coordinate system through a first set of PI regulators, based on an optimal generator speed, the generator speed, the voltage value at the connection point and the current value at the connection point;
a second component determination unit, configured to obtain a reference output voltage component of the reactive power compensation device (500) on a d-axis of the two-phase synchronous rotating coordinate system through second a set of PI regulators, based on the reference voltage of the voltage module of the reactive power compensation device (500), the voltage value of the voltage module of the reactive power compensation device (500) and the current value at the connection point; and
a transformation unit, configured to obtain the reference output voltage of the reactive power compensation device (500) in a three-phase stationary coordinate system by performing coordinate transformation on the reference output voltage component of the reactive power compensation device (500) on the q-axis and the reference output voltage component of the reactive power compensation device (500) on the d-axis;
wherein the optimal generator speed is a generator speed that enables maximum power point tracking and is determined based on the wind speed.

11. The control device according to claim 10, wherein the first set of PI regulators comprises a first PI regulator, a second PI regulator, and a third PI regulator;
wherein the first component determination unit is configured to input a difference between the optimal generator speed and the generator speed to the first PI regulator; input a difference between a sum of an output of the first PI regulator plus a rated voltage of the generator and the voltage value at the connection point to the second PI regulator; and input a difference between an output of the second PI regulator and a current component at the connection point on the q-axis of the two-phase synchronous rotating coordinate system to the third PI regulator; and output the reference output voltage component of the reactive power compensation device (500) on the q-axis of the two-phase synchronous rotating coordinate system through the third PI regulator;
wherein the second set of PI regulators comprises a fourth PI regulator and a fifth PI regulator;
wherein the second component determination unit is configured to input a difference between an average voltage value of voltage modules of the reactive power compensation device (500) and the reference voltage of the voltage module of the reactive power compensation device (500) to the fourth PI regulator; input a difference between an output of the fourth PI regulator and a current component at the connection point on the d-axis of the two-phase synchronous rotating coordinate system to the fifth PI regulator; and output the reference output voltage component of the reactive power compensation device (500) on the d-axis of the two-phase synchronous rotating coordinate system through the fifth PI regulator.

12. The control device according to any one of claims 7 to 11, wherein the control device is integrated in the reactive power compensation device (500), wherein the reactive power compensation device (500) is any one of a modular multilevel converter, a static var generator, and a static synchronous compensator.

13. A semi-direct-drive direct current wind turbine, comprising the control device according to any one of claims 7-12.

14. A control device for a semi-direct-drive direct current wind turbine, comprising:
a processor; and
a memory having a computer program stored thereon, wherein
the processor, when executing the computer program, implements the control method for a semi-direct-drive direct current wind turbine according to any one of claims 1 to 6.

15. A computer-readable storage medium storing a computer program, wherein the computer program, when executed by a processor, implements the control method for a semi-direct-drive direct current wind turbine according to any one of claims 1 to 6.

## Patentansprüche

1. Steuerungsverfahren für eine Gleichstrom-Windturbine mit Halbdirektantrieb, umfassend:
Bestimmen (S10), in einem Fall, dass die Gleichstrom-Windturbine mit Halbdirektantrieb in einem Modus zum Maximum Power Point Tracking, MPPT-Modus, arbeitet, einer Referenzausgangsspannung einer Blindleistungskompensationsvorrichtung (500); und
Steuern (S20), unter Verwendung der bestimmten Referenzausgangsspannung der Blindleistungskompensationsvorrichtung (500) als Ziel, einer Ausgangsspannung der Blindleistungskompensationsvorrichtung (500), um eine Spannung an einem Verbindungspunkt einzustellen, wobei das Steuern der Ausgangsspannung der Blindleistungskompensationsvorrichtung (500) Steuern einer Wirkleistung an dem Verbindungspunkt und Steuern eines elektromagnetischen Drehmoments, das auf einen Rotor der Gleichstrom-Windturbine mit Halbdirektantrieb einwirkt, ermöglicht;
wobei ein Eingangsanschluss eines Generators (200) der Gleichstrom-Windturbine mit Halbdirektantrieb mit einem Schaltgetriebe verbunden ist und ein Ausgangsanschluss des Generators (200) jeweils mit einer Primärseite eines Transformators (300) auf der Generatorseite und der Blindleistungskompensationsvorrichtung (500) über den Verbindungspunkt verbunden ist und eine Sekundärseite des Transformators (300) auf der Generatorseite mit einem Ausgangsanschluss der Gleichstrom-Windturbine mit Halbdirektantrieb der Reihe nach über einen Gleichrichter (400) und eine Hochspannungsschaltvorrichtung (600) verbunden ist.

2. Steuerungsverfahren nach Anspruch 1, wobei das Bestimmen einer Referenzausgangsspannung einer Blindleistungskompensationsvorrichtung (500) Folgendes umfasst:
Bestimmen der Referenzausgangsspannung der Blindleistungskompensationsvorrichtung (500) basierend auf mindestens einem von einer Windgeschwindigkeit, einer Generatordrehzahl, einem Spannungswert an dem Verbindungspunkt, einem Stromwert an dem Verbindungspunkt, einem Spannungswert eines Spannungsmoduls der Blindleistungskompensationsvorrichtung (500) und einer Referenzspannung des Spannungsmoduls der Blindleistungskompensationsvorrichtung (500);
wobei die Referenzspannung des Spannungsmoduls der Blindleistungskompensationsvorrichtung (500) eine Spannung ist, die es der Blindleistungskompensationsvorrichtung (500) ermöglicht, in einem spannungsausgeglichenen Zustand des Spannungsmoduls zu arbeiten.

3. Steuerungsverfahren nach Anspruch 2, wobei das Bestimmen einer Referenzausgangsspannung einer Blindleistungskompensationsvorrichtung (500) Folgendes umfasst:
Bestimmen der Referenzausgangsspannung der Blindleistungskompensationsvorrichtung (500) durch PI-Einstellung basierend auf mindestens einem von der Windgeschwindigkeit, der Generatordrehzahl, dem Spannungswert an dem Verbindungspunkt, dem Stromwert an dem Verbindungspunkt, dem Spannungswert des Spannungsmoduls der Blindleistungskompensationsvorrichtung (500) und der Referenzspannung des Spannungsmoduls der Blindleistungskompensationsvorrichtung (500), sodass es einer durch den Generator ausgegebenen Wirkleistung ermöglicht wird, durch den Ausgangsanschluss der Gleichstrom-Windturbine mit Halbdirektantrieb ausgegeben zu werden.

4. Steuerungsverfahren nach Anspruch 3, wobei das Bestimmen einer Referenzausgangsspannung einer Blindleistungskompensationsvorrichtung (500) Folgendes umfasst:
Erlangen (S101) einer Referenzausgangsspannungskomponente der Blindleistungskompensationsvorrichtung (500) auf einer q-Achse eines zweiphasigen synchronen rotierenden Koordinatensystems durch einen ersten Satz von PI-Reglern basierend auf einer optimalen Generatordrehzahl, der Generatordrehzahl, dem Spannungswert an dem Verbindungspunkt und dem Stromwert an dem Verbindungspunkt;
Erlangen (S102) einer Referenzausgangsspannungskomponente der Blindleistungskompensationsvorrichtung (500) auf einer d-Achse des zweiphasigen synchronen rotierenden Koordinatensystems durch einen zweiten Satz von PI-Reglern basierend auf der Referenzspannung des Spannungsmoduls der Blindleistungskompensationsvorrichtung (500), dem Spannungswert des Spannungsmoduls der Blindleistungskompensationsvorrichtung (500) und dem Stromwert an dem Verbindungspunkt; und
Erlangen (S103) der Referenzausgangsspannung der Blindleistungskompensationsvorrichtung (500) in einem dreiphasigen stationären Koordinatensystem durch Durchführen einer Koordinatentransformation an der Referenzausgangsspannungskomponente der Blindleistungskompensationsvorrichtung (500) auf der q-Achse und der Referenzausgangsspannungskomponente der Blindleistungskompensationsvorrichtung (500) auf der d-Achse;
wobei die optimale Generatordrehzahl eine Generatordrehzahl ist, die Maximum Power Point Tracking ermöglicht und basierend auf der Windgeschwindigkeit bestimmt wird.

5. Steuerungsverfahren nach Anspruch 4, wobei der erste Satz von PI-Reglern einen ersten PI-Regler, einen zweiten PI-Regler und einen dritten PI-Regler umfasst;
wobei das Erlangen einer Referenzausgangsspannungskomponente der Blindleistungskompensationsvorrichtung (500) auf einer q-Achse eines zweiphasigen synchronen rotierenden Koordinatensystems durch einen ersten Satz von PI-Reglern Folgendes umfasst:
Eingeben einer Differenz zwischen der optimalen Generatordrehzahl und der Generatordrehzahl in den ersten PI-Regler;
Eingeben einer Differenz zwischen einer Summe einer Ausgabe des ersten PI-Reglers plus einer Nennspannung des Generators und dem Spannungswert an dem Verbindungspunkt in den zweiten PI-Regler;
Eingeben einer Differenz zwischen einer Ausgabe des zweiten PI-Reglers und einer Stromkomponente an dem Verbindungspunkt auf der q-Achse des zweiphasigen synchronen rotierenden Koordinatensystems in den dritten PI-Regler; und
Ausgeben der Referenzausgangsspannungskomponente der Blindleistungskompensationsvorrichtung (500) auf der q-Achse des zweiphasigen synchronen rotierenden Koordinatensystems durch den dritten PI-Regler;
wobei der zweite Satz von PI-Reglern einen vierten PI-Regler und einen fünften PI-Regler umfasst;
wobei das Erlangen einer Referenzausgangsspannungskomponente der Blindleistungskompensationsvorrichtung (500) auf einer d-Achse des zweiphasigen synchronen rotierenden Koordinatensystems durch einen zweiten Satz von PI-Reglern Folgendes umfasst:
Eingeben einer Differenz zwischen einem durchschnittlichen Spannungswert von Spannungsmodulen der Blindleistungskompensationsvorrichtung (500) und der Referenzspannung des Spannungsmoduls der Blindleistungskompensationsvorrichtung (500) in den vierten PI-Regler;
Eingeben einer Differenz zwischen einer Ausgabe des vierten PI-Reglers und einer Stromkomponente an dem Verbindungspunkt auf der d-Achse des zweiphasigen synchronen rotierenden Koordinatensystems in den fünften PI-Regler; und
Ausgeben der Referenzausgangsspannungskomponente der Blindleistungskompensationsvorrichtung (500) auf der d-Achse des zweiphasigen synchronen rotierenden Koordinatensystems durch den fünften PI-Regler.

6. Steuerungsverfahren nach Anspruch 1, wobei die Blindleistungskompensationsvorrichtung (500) ein beliebiger von einem modularen Mehrstufenumrichter, einem statischen Blindleistungsgenerator und einem statischen Synchronkompensator ist.

7. Steuerungsvorrichtung für eine Gleichstrom-Windturbine mit Halbdirektantrieb, umfassend:
eine Referenzspannungsbestimmungseinheit (10), die dazu konfiguriert ist, in einem Fall, dass die Gleichstrom-Windturbine mit Halbdirektantrieb in einem Modus zum Maximum Power Point Tracking, MPPT-Modus, arbeitet, eine Referenzausgangsspannung einer Blindleistungskompensationsvorrichtung (500) zu bestimmen; und
eine Spannungssteuerungseinheit (20), die dazu konfiguriert ist, eine Ausgangsspannung der Blindleistungskompensationsvorrichtung (500) durch Verwenden der bestimmten Referenzausgangsspannung der Blindleistungskompensationsvorrichtung (500) als Ziel zu steuern, um eine Spannung an einem Verbindungspunkt einzustellen, wobei das Steuern der Ausgangsspannung der Blindleistungskompensationsvorrichtung (500) Steuern einer Wirkleistung an dem Verbindungspunkt und Steuern eines elektromagnetischen Drehmoments, das auf einen Rotor der Gleichstrom-Windturbine mit Halbdirektantrieb einwirkt, ermöglicht;
wobei ein Eingangsanschluss eines Generators (200) der Gleichstrom-Windturbine mit Halbdirektantrieb mit einem Schaltgetriebe (100) verbunden ist und ein Ausgangsanschluss des Generators (200) jeweils mit einer Primärseite eines Transformators (300) auf der Generatorseite und der Blindleistungskompensationsvorrichtung (500) über den Verbindungspunkt verbunden ist und eine Sekundärseite des Transformators (300) auf der Generatorseite mit einem Ausgangsanschluss der Gleichstrom-Windturbine mit Halbdirektantrieb der Reihe nach über einen Gleichrichter (400) und eine Hochspannungsschaltvorrichtung (600) verbunden ist.

8. Steuerungsvorrichtung nach Anspruch 7, wobei die Referenzspannungsbestimmungseinheit (10) dazu konfiguriert ist, die Referenzausgangsspannung der Blindleistungskompensationsvorrichtung (500) basierend auf mindestens einem von einer Windgeschwindigkeit, einer Generatordrehzahl, einem Spannungswert an dem Verbindungspunkt, einem Stromwert an dem Verbindungspunkt, einem Spannungswert eines Spannungsmoduls der Blindleistungskompensationsvorrichtung (500) und einer Referenzspannung des Spannungsmoduls der Blindleistungskompensationsvorrichtung (500) zu bestimmen;
wobei die Referenzspannung des Spannungsmoduls der Blindleistungskompensationsvorrichtung (500) eine Spannung ist, die es der Blindleistungskompensationsvorrichtung (500) ermöglicht, in einem spannungsausgeglichenen Zustand des Spannungsmoduls zu arbeiten.

9. Steuerungsvorrichtung nach Anspruch 8, wobei die Referenzspannungsbestimmungseinheit (10) dazu konfiguriert ist, die Referenzausgangsspannung der Blindleistungskompensationsvorrichtung (500) durch PI-Einstellung basierend auf mindestens einem von der Windgeschwindigkeit, der Generatordrehzahl, dem Spannungswert an dem Verbindungspunkt, dem Stromwert an dem Verbindungspunkt, dem Spannungswert des Spannungsmoduls der Blindleistungskompensationsvorrichtung (500) und der Referenzspannung des Spannungsmoduls der Blindleistungskompensationsvorrichtung (500) zu bestimmen, sodass es einer durch den Generator ausgegebenen Wirkleistung ermöglicht wird, durch den Ausgangsanschluss der Gleichstrom-Windturbine mit Halbdirektantrieb ausgegeben zu werden.

10. Steuerungsvorrichtung nach Anspruch 9, wobei die Referenzspannungsbestimmungseinheit (10) Folgendes umfasst:
eine erste Komponentenbestimmungseinheit, die dazu konfiguriert ist, eine Referenzausgangsspannungskomponente der Blindleistungskompensationsvorrichtung (500) auf einer q-Achse eines zweiphasigen synchronen rotierenden Koordinatensystems durch einen ersten Satz von PI-Reglern basierend auf einer optimalen Generatordrehzahl, der Generatordrehzahl, dem Spannungswert an dem Verbindungspunkt und dem Stromwert an dem Verbindungspunkt zu erlangen;
eine zweite Komponentenbestimmungseinheit, die dazu konfiguriert ist, eine Referenzausgangsspannungskomponente der Blindleistungskompensationsvorrichtung (500) auf einer d-Achse des zweiphasigen synchronen rotierenden Koordinatensystems durch einen zweiten Satz von PI-Reglern basierend auf der Referenzspannung des Spannungsmoduls der Blindleistungskompensationsvorrichtung (500), dem Spannungswert des Spannungsmoduls der Blindleistungskompensationsvorrichtung (500) und dem Stromwert an dem Verbindungspunkt zu erlangen; und
eine Transformationseinheit, die dazu konfiguriert ist, die Referenzausgangsspannung der Blindleistungskompensationsvorrichtung (500) in einem dreiphasigen stationären Koordinatensystem durch Durchführen einer Koordinatentransformation an der Referenzausgangsspannungskomponente der Blindleistungskompensationsvorrichtung (500) auf der q-Achse und der Referenzausgangsspannungskomponente der Blindleistungskompensationsvorrichtung (500) auf der d-Achse zu erlangen;
wobei die optimale Generatordrehzahl eine Generatordrehzahl ist, die Maximum Power Point Tracking ermöglicht und basierend auf der Windgeschwindigkeit bestimmt wird.

11. Steuerungsvorrichtung nach Anspruch 10, wobei der erste Satz von PI-Reglern einen ersten PI-Regler, einen zweiten PI-Regler und einen dritten PI-Regler umfasst;
wobei die erste Komponentenbestimmungseinheit dazu konfiguriert ist, eine Differenz zwischen der optimalen Generatordrehzahl und der Generatordrehzahl in den ersten PI-Regler einzugeben; eine Differenz zwischen einer Summe einer Ausgabe des ersten PI-Reglers plus einer Nennspannung des Generators und dem Spannungswert an dem Verbindungspunkt in den zweiten PI-Regler einzugeben; und eine Differenz zwischen einer Ausgabe des zweiten PI-Reglers und einer Stromkomponente an dem Verbindungspunkt auf der q-Achse des zweiphasigen synchronen rotierenden Koordinatensystems in den dritten PI-Regler einzugeben; und die Referenzausgangsspannungskomponente der Blindleistungskompensationsvorrichtung (500) auf der q-Achse des zweiphasigen synchronen rotierenden Koordinatensystems durch den dritten PI-Regler auszugeben;
wobei der zweite Satz von PI-Reglern einen vierten PI-Regler und einen fünften PI-Regler umfasst;
wobei die zweite Komponentenbestimmungseinheit dazu konfiguriert ist, eine Differenz zwischen einem durchschnittlichen Spannungswert von Spannungsmodulen der Blindleistungskompensationsvorrichtung (500) und der Referenzspannung des Spannungsmoduls der Blindleistungskompensationsvorrichtung (500) in den vierten PI-Regler einzugeben; eine Differenz zwischen einer Ausgabe des vierten PI-Reglers und einer Stromkomponente an dem Verbindungspunkt auf der d-Achse des zweiphasigen synchronen rotierenden Koordinatensystems in den fünften PI-Regler einzugeben; und die Referenzausgangsspannungskomponente der Blindleistungskompensationsvorrichtung (500) auf der d-Achse des zweiphasigen synchronen rotierenden Koordinatensystems durch den fünften PI-Regler auszugeben.

12. Steuerungsvorrichtung nach einem der Ansprüche 7 bis 11, wobei die Steuerungsvorrichtung in die Blindleistungskompensationsvorrichtung (500) integriert ist, wobei die Blindleistungskompensationsvorrichtung (500) ein beliebiger von einem modularen Mehrstufenumrichter, einem statischen Blindleistungsgenerator und einem statischen Synchronkompensator ist.

13. Gleichstrom-Windturbine mit Halbdirektantrieb, umfassend die Steuerungsvorrichtung nach einem der Ansprüche 7-12.

14. Steuerungsvorrichtung für eine Gleichstrom-Windturbine mit Halbdirektantrieb, umfassend:
einen Prozessor; und
einen Speicher mit einem darauf gespeicherten Computerprogramm, wobei
der Prozessor, wenn er das Computerprogramm ausführt, das Steuerungsverfahren für eine Gleichstrom-Windturbine mit Halbdirektantrieb nach einem der Ansprüche 1 bis 6 implementiert.

15. Computerlesbares Speichermedium, das ein Computerprogramm speichert, wobei das Computerprogramm, wenn es durch einen Prozessor ausgeführt wird, das Steuerungsverfahren für eine Gleichstrom-Windturbine mit Halbdirektantrieb nach einem der Ansprüche 1 bis 6 implementiert.

## Revendications

1. Procédé de commande d'une éolienne à courant continu à entraînement semi-direct, comprenant :
la détermination (S10), dans le cas où l'éolienne à courant continu à entraînement semi-direct fonctionne dans un mode MPPT de suivi du point de puissance maximale, d'une tension de sortie de référence d'un dispositif de compensation de puissance réactive (500) ; et
la commande (S20), en utilisant la tension de sortie de référence déterminée du dispositif de compensation de puissance réactive (500) comme cible, d'une tension de sortie du dispositif de compensation de puissance réactive (500), pour l'ajustement d'une tension à un point de connexion, dans lequel la commande de la tension de sortie du dispositif de compensation de puissance réactive (500) permet la commande d'une puissance active au point de connexion et la commande d'un couple électromagnétique agissant sur un rotor de l'éolienne à courant continu à entraînement semi-direct ;
dans lequel une borne d'entrée d'un générateur (200) de l'éolienne à courant continu à entraînement semi-direct est connectée à une boîte de vitesses, et une borne de sortie du générateur (200) est respectivement connectée à une face primaire d'un transformateur (300) côté générateur et au dispositif de compensation de puissance réactive (500) via le point de connexion, et une face secondaire du transformateur (300) côté générateur est connectée à une borne de sortie de l'éolienne à courant continu à entraînement semi-direct via un redresseur (400) et un dispositif de commutation haute tension (600) en séquence.

2. Procédé de commande selon la revendication 1, dans lequel la détermination d'une tension de sortie de référence d'un dispositif de compensation de puissance réactive (500) comprend :
la détermination de la tension de sortie de référence du dispositif de compensation de puissance réactive (500), à partir d'au moins l'une parmi une vitesse de vent, une vitesse de générateur, une valeur de tension au point de connexion, une valeur de courant au point de connexion, une valeur de tension d'un module de tension du dispositif de compensation de puissance réactive (500) et une tension de référence du module de tension du dispositif de compensation de puissance réactive (500) ;
dans lequel la tension de référence du module de tension du dispositif de compensation de puissance réactive (500) est une tension qui permet au dispositif de compensation de puissance réactive (500) de fonctionner dans un état d'équilibre en tension du module de tension.

3. Procédé de commande selon la revendication 2, dans lequel la détermination d'une tension de sortie de référence d'un dispositif de compensation de puissance réactive (500) comprend :
la détermination de la tension de sortie de référence du dispositif de compensation de puissance réactive (500) par réglage PI, à partir d'au moins l'une parmi la vitesse du vent, la vitesse du générateur, la valeur de tension au point de connexion, la valeur de courant au point de connexion, la valeur de tension du module de tension du dispositif de compensation de puissance réactive (500) et la tension de référence du module de tension du dispositif de compensation de puissance réactive (500), de sorte qu'une puissance active délivrée par le générateur puisse être délivrée par la borne de sortie de l'éolienne à courant continu à entraînement semi-direct.

4. Procédé de commande selon la revendication 3, dans lequel la détermination d'une tension de sortie de référence d'un dispositif de compensation de puissance réactive (500) comprend :
l'obtention (S101) d'une composante de tension de sortie de référence du dispositif de compensation de puissance réactive (500) sur un axe q d'un repère tournant synchrone diphasé par l'intermédiaire d'un premier ensemble de régulateurs PI, à partir d'une vitesse de générateur optimale, de la vitesse du générateur, de la valeur de tension au point de connexion et de la valeur de courant au point de connexion ;
l'obtention (S102) d'une composante de tension de sortie de référence du dispositif de compensation de puissance réactive (500) sur un axe d du repère tournant synchrone diphasé par l'intermédiaire d'un deuxième ensemble de régulateurs PI, à partir de la tension de référence du module de tension du dispositif de compensation de puissance réactive (500), de la valeur de tension du module de tension du dispositif de compensation de puissance réactive (500) et de la valeur de courant au point de connexion ; et
l'obtention (S103) de la tension de sortie de référence du dispositif de compensation de puissance réactive (500) dans un repère fixe triphasé en effectuant une transformation de coordonnées sur la composante de tension de sortie de référence du dispositif de compensation de puissance réactive (500) sur l'axe q et la composante de tension de sortie de référence du dispositif de compensation de puissance réactive (500) sur l'axe d ;
dans lequel la vitesse optimale du générateur est une vitesse du générateur qui permet un suivi du point de puissance maximale et est déterminée à partir de la vitesse du vent.

5. Procédé de commande selon la revendication 4, dans lequel le premier ensemble de régulateurs PI comprend un premier régulateur PI, un deuxième régulateur PI et un troisième régulateur PI ;
dans lequel l'obtention d'une composante de tension de sortie de référence du dispositif de compensation de puissance réactive (500) sur un axe q d'un repère tournant synchrone diphasé par l'intermédiaire d'un premier ensemble de régulateurs PI comprend :
la saisie d'une différence entre la vitesse optimale du générateur et la vitesse du générateur au premier régulateur PI ;
la saisie d'une différence entre une somme d'une sortie du premier régulateur PI plus une tension nominale du générateur et la valeur de tension au point de connexion au deuxième régulateur PI ;
la saisie d'une différence entre une sortie du deuxième régulateur PI et une composante de courant au point de connexion sur l'axe q du repère tournant synchrone diphasé au troisième régulateur PI ; et
la délivrance de la composante de tension de sortie de référence du dispositif de compensation de puissance réactive (500) sur l'axe q du repère tournant synchrone diphasé par l'intermédiaire du troisième régulateur PI ;
dans lequel le deuxième ensemble de régulateurs PI comprend un quatrième régulateur PI et un cinquième régulateur PI ;
dans lequel l'obtention d'une composante de tension de sortie de référence du dispositif de compensation de puissance réactive (500) sur un axe d du repère tournant synchrone diphasé par l'intermédiaire d'un deuxième ensemble de régulateurs PI comprend :
la saisie d'une différence entre une valeur moyenne de tension des modules de tension du dispositif de compensation de puissance réactive (500) et la tension de référence du module de tension du dispositif de compensation de puissance réactive (500) au quatrième régulateur PI ;
la saisie d'une différence entre une sortie du quatrième régulateur PI et une composante de courant au point de connexion sur l'axe d du repère tournant synchrone diphasé au cinquième régulateur PI ; et
la délivrance de la composante de tension de sortie de référence du dispositif de compensation de puissance réactive (500) sur l'axe d du repère tournant synchrone diphasé par l'intermédiaire du cinquième régulateur PI.

6. Procédé de commande selon la revendication 1, dans lequel le dispositif de compensation de puissance réactive (500) est l'un quelconque parmi un convertisseur modulaire multiniveaux, un générateur de variables statiques et un compensateur synchrone statique.

7. Dispositif de commande d'une éolienne à courant continu à entraînement semi-direct, comprenant :
une unité de détermination de tension de référence (10), configurée de façon à déterminer une tension de sortie de référence d'un dispositif de compensation de puissance réactive (500) dans le cas où l'éolienne à courant continu à entraînement semi-direct fonctionne dans un mode MPPT de suivi du point de puissance maximale ; et
une unité de commande de tension (20), configurée de façon à commander une tension de sortie du dispositif de compensation de puissance réactive (500) en utilisant la tension de sortie de référence déterminée du dispositif de compensation de puissance réactive (500) comme cible, à ajuster une tension à un point de connexion, dans laquelle la commande de la tension de sortie du dispositif de compensation de puissance réactive (500) permet de commander une puissance active au point de connexion et de commander un couple électromagnétique agissant sur un rotor de l'éolienne à courant continu semi-direct ;
dans lequel une borne d'entrée d'un générateur (200) de l'éolienne à courant continu à entraînement semi-direct est connectée à une boîte de vitesses (100), et une borne de sortie du générateur (200) est respectivement connectée à une face primaire d'un transformateur (300) côté générateur et au dispositif de compensation de puissance réactive (500) via le point de connexion, et une face secondaire du transformateur (300) côté générateur est connectée à une borne de sortie de l'éolienne à courant continu à entraînement semi-direct via un redresseur (400) et un dispositif de commutation haute tension (600) en séquence.

8. Dispositif de commande selon la revendication 7, dans lequel l'unité de détermination de tension de référence (10) est configurée de façon à déterminer la tension de sortie de référence du dispositif de compensation de puissance réactive (500) à partir d'au moins l'une parmi une vitesse de vent, une vitesse de générateur, une valeur de tension au point de connexion, une valeur de courant au point de connexion, une valeur de tension d'un module de tension du dispositif de compensation de puissance réactive (500) et une tension de référence du module de tension du dispositif de compensation de puissance réactive (500) ;
dans lequel la tension de référence du module de tension du dispositif de compensation de puissance réactive (500) est une tension qui permet au dispositif de compensation de puissance réactive (500) de fonctionner dans un état d'équilibre en tension du module de tension.

9. Dispositif de commande selon la revendication 8, dans lequel l'unité de détermination de tension de référence (10) est configurée de façon à déterminer la tension de sortie de référence du dispositif de compensation de puissance réactive (500) par réglage PI, à partir d'au moins l'une parmi la vitesse du vent, la vitesse du générateur, la valeur de tension au point de connexion, la valeur de courant au point de connexion, la valeur de tension du module de tension du dispositif de compensation de puissance réactive (500) et la tension de référence du module de tension du dispositif de compensation de puissance réactive (500), de sorte qu'une puissance active délivrée par le générateur puisse être délivrée par la borne de sortie de l'éolienne à courant continu à entraînement semi-direct.

10. Dispositif de commande selon la revendication 9, dans lequel l'unité de détermination de tension de référence (10) comprend :
une première unité de détermination de composante, configurée de façon à obtenir une composante de tension de sortie de référence du dispositif de compensation de puissance réactive (500) sur un axe q d'un repère tournant synchrone diphasé par l'intermédiaire d'un premier ensemble de régulateurs PI, à partir d'une vitesse de générateur optimale, de la vitesse du générateur, de la valeur de tension au point de connexion et de la valeur de courant au point de connexion ;
une deuxième unité de détermination de composante, configurée de façon à obtenir une composante de tension de sortie de référence du dispositif de compensation de puissance réactive (500) sur un axe d du repère tournant synchrone diphasé par l'intermédiaire d'un deuxième ensemble de régulateurs PI, à partir de la tension de référence du module de tension du dispositif de compensation de puissance réactive (500), de la valeur de tension du module de tension du dispositif de compensation de puissance réactive (500) et de la valeur de courant au point de connexion ; et
une unité de transformation, configurée de façon à obtenir la tension de sortie de référence du dispositif de compensation de puissance réactive (500) dans un repère fixe triphasé en effectuant une transformation de coordonnées sur la composante de tension de sortie de référence du dispositif de compensation de puissance réactive (500) sur l'axe q et la composante de tension de sortie de référence du dispositif de compensation de puissance réactive (500) sur l'axe d ;
dans lequel la vitesse optimale du générateur est une vitesse du générateur qui permet un suivi du point de puissance maximale et est déterminée à partir de la vitesse du vent.

11. Dispositif de commande selon la revendication 10, dans lequel le premier ensemble de régulateurs PI comprend un premier régulateur PI, un deuxième régulateur PI et un troisième régulateur PI ;
dans lequel la première unité de détermination de composante est configurée de façon à saisir une différence entre la vitesse optimale du générateur et la vitesse du générateur au premier régulateur PI ; à saisir une différence entre une somme d'une sortie du premier régulateur PI plus une tension nominale du générateur et la valeur de tension au point de connexion au deuxième régulateur PI ; et à saisir une différence entre une sortie du deuxième régulateur PI et une composante de courant au point de connexion sur l'axe q du repère tournant synchrone diphasé au troisième régulateur PI ; et à délivrer la composante de tension de sortie de référence du dispositif de compensation de puissance réactive (500) sur l'axe q du repère tournant synchrone diphasé par l'intermédiaire du troisième régulateur PI ;
dans lequel le deuxième ensemble de régulateurs PI comprend un quatrième régulateur PI et un cinquième régulateur PI ;
dans lequel la deuxième unité de détermination de composante est configurée de façon à saisir une différence entre une valeur moyenne de tension des modules de tension du dispositif de compensation de puissance réactive (500) et la tension de référence du module de tension du dispositif de compensation de puissance réactive (500) au quatrième régulateur PI ; à saisir une différence entre une sortie du quatrième régulateur PI et une composante de courant au point de connexion sur l'axe d du repère tournant synchrone diphasé au cinquième régulateur PI ; et à délivrer la composante de tension de sortie de référence du dispositif de compensation de puissance réactive (500) sur l'axe d du repère tournant synchrone diphasé par l'intermédiaire du cinquième régulateur PI.

12. Dispositif de commande selon l'une des revendications 7 à 11, dans lequel le dispositif de commande est intégré dans le dispositif de compensation de puissance réactive (500), dans lequel le dispositif de compensation de puissance réactive (500) est l'un quelconque parmi un convertisseur modulaire multiniveaux, un générateur de variables statiques et un compensateur synchrone statique.

13. Éolienne à courant continu à entraînement semi-direct, comprenant le dispositif de commande selon l'une des revendications 7 à 12.

14. Dispositif de commande d'une éolienne à courant continu à entraînement semi-direct, comprenant :
un processeur ; et
une mémoire sur laquelle est stocké un programme informatique, dans lequel
le processeur, lorsqu'il exécute le programme informatique, met en œuvre le procédé de commande d'une éolienne à courant continu à entraînement semi-direct selon l'une des revendications 1 à 6.

15. Support de stockage lisible par ordinateur stockant un programme informatique, dans lequel le programme informatique, lorsqu'il est exécuté par un processeur, met en œuvre le procédé de commande d'une éolienne à courant continu à entraînement semi-direct selon l'une des revendications 1 à 6.
